(19) Europäisches Patentamt
European Patent Office
Office européen des brevets

(11) **EP 2 118 037 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **08709282.1**

(22) Anmeldetag: **04.03.2008**

(51) Int Cl.:
*C04B 35/42* (2006.01)      *C04B 35/44* (2006.01)
*C04B 35/01* (2006.01)      *C04B 35/626* (2006.01)

(86) Internationale Anmeldenummer:
**PCT/EP2008/052628**

(87) Internationale Veröffentlichungsnummer:
**WO 2008/110485 (18.09.2008 Gazette 2008/38)**

(54) **KERAMIKMATERIAL UND ELEKTROKERAMISCHES BAUELEMENT MIT DEM KERAMIKMATERIAL**

CERAMIC MATERIAL AND ELECTROCERAMIC COMPONENT COMPRISING SAID CERAMIC MATERIAL

MATÉRIAU CÉRAMIQUE ET COMPOSANT ÉLECTROCÉRAMIQUE CONTENANT LE MATÉRIAU CÉRAMIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.03.2007 DE 102007012468**

(43) Veröffentlichungstag der Anmeldung:
**18.11.2009 Patentblatt 2009/47**

(73) Patentinhaber: **Epcos AG**
**81671 München (DE)**

(72) Erfinder:
• **CERNOCH, Claus**
  **A-1220 Wien (AT)**
• **FELTZ, Adalbert**
  **A-8530 Deutschlandsberg (AT)**

(74) Vertreter: **Epping - Hermann - Fischer Patentanwaltsgesellschaft mbH Schloßschmidstraße 5 80639 München (DE)**

(56) Entgegenhaltungen:
WO-A-2006/109792      JP-A- 11 251 109
JP-A- 2003 183 075      US-B1- 6 306 315

EP 2 118 037 B1

**Beschreibung**

Die Patentanmeldung betrifft ein Keramikmaterial sowie ein Bauelement mit dem Keramikmaterial.

Keramiken mit einem negativen Temperaturkoeffizienten werden beispielsweise in Thermistoren zur Temperaturmessung eingesetzt. Aus der Druckschrift JP 2006054258 A ist ein hochtemperaturstabiler Thermistor bekannt, der einen gesinterten Körper von Metalloxid mit einem molaren Verhältnis Y, Cr, Mn und Ca von 79,5:8,5:8,5:3,5 aufweist.

JP 2003-183075 A offenbart eine Verbindung der allgemeinen Formel $M1_aM2_bM3_cM4_dO_3$. In dieser Formel stellt das Bezugszeichen M1 ein Element der Gruppe 3A mit Ausnahme von La dar. Die Elemente Y, Sn und Gd sind bevorzugt. Das Bezugszeichen M2 repräsentiert mindestens ein Element der Gruppe 2A. In dieser Hinsicht sind die Elemente Mg, Ca und Sr bevorzugt, wobei Sr am meisten bevorzugt ist. Das Bezugszeichen M3 stellt ein Element der Gruppen 4A bis 8 dar. In dieser Hinsicht können zwei Elemente aus den Gruppen ausgewählt werden. Die Elemente Cr, Fe, Mn und Co sind bevorzugt und Cr und Mn sind am meisten bevorzugt. Das Bezugszeichen M4 repräsentiert eines der Elemente Al oder Ga, wobei Al bevorzugt ist. Für die jeweiligen Indizes sind folgende Bereiche definiert: $0,6 \leq A \leq 0,998$; $0,002 \leq b \leq 0,4$; $0,01 \leq c \leq 0,6$; $0,4 \leq d \leq 0,99$; $1 \leq d / c \leq 99$.

WO 2006/109792 A offenbart eine Verbindung der allgemeinen Formel: $M1_aM2_bM3_cAl_dCr_eO_f$. In dieser Formel repräsentiert das Bezugszeichen M1 mindestens ein Element der Gruppe A3 mit Ausnahme von Al, das Bezugszeichen M2 mindestens ein Element der Gruppe 2A und das Bezugszeichen M3 mindestens ein Element der Gruppen 4A bis 8 , Außer für Cr. Die Indizes sind durch folgende Bereiche definiert: $0,600 \leq a \leq 1,000$; $0 \leq b \leq 0,400$; $0,150 \leq c < 0,600$; $0,400 \leq d \leq 0,800$; $0 < e \leq 0,050$; $0 < e / (c + e) \leq 0,18$ und $2,80 \leq f \leq 3,30$.

Die Aufgabe von zumindest einigen Ausführungsformen der vorliegenden Erfindung besteht darin ein weiteres Keramikmaterial mit einem negativen Temperaturkoeffizienten anzugeben.

Diese Aufgabe wird gelöst durch ein Keramikmaterial nach Anspruch 1. Weitere Ausgestaltungen des Keramikmaterials sowie ein Herstellungsverfahren für das Keramikmaterial und ein elektrokeramisches Bauelement mit dem Keramikmaterial sind Gegenstand weiterer Ansprüche.

Erfindungsgemäß wird ein Keramikmaterial mit negativen Temperaturkoeffizienten des spezifischen Widerstands mit der folgenden allgemeinen Formel angegeben:

$$[\{(SE_1^{III},SE_2^{III})_{1-x}(M_1^{II},M_2^{II})_x\}(Cr_{1-y-z}Mn_y(Me_1^{III},Me_2^{III})_z)O_3]$$

wobei $SE_1^{III}$ oder $SE_2^{III}$ Seltenerdmetallkationen sind, $M_1^{II}$ und $M_2^{II}$ ausgewählt sind aus $Ca^{II}$, $Sr^{II}$ und $Me_1^{III}$ und $Me_2^{III}$ redoxstabile, dreiwertige Metallkationen sind.

Durch zumindest teilweisen Ersatz von Cr durch die dreiwertigen Metalle $Me_1^{III}$, $Me_2^{III}$ durch entsprechende Variation des Parameters z lässt sich der Widerstand des Keramikmaterials auf gewünschte Werte einstellen. Weiterhin kann das Keramikmaterial eine Perowskit-Kristallstruktur der allgemeinen Formel $ABX_3$ aufweisen, wobei die Seltenerdmetallkationen $SE_1^{III}$, $SE_2^{III}$ und die zweiwertigen Metallkationen $M_1^{III}$ und $M_2^{II}$ die A-Plätze im Kristallgitter besetzen, die B-Plätze von den Metallkationen Cr, Mn, $Me_1^{III}$ und $Me_2^{III}$ und die X-Plätze von Sauerstoff eingenommen werden. Für die Parameter x, z und y gilt:

$$x < 1; \quad y+z < 1; \quad 0 < x < 1; \quad 0 < z < 1; \quad 0 < y < 1 \text{-}z.$$

In einer Ausführungsform des erfindungsgemäßen Keramikmaterials liegt sowohl Cr als auch Mn in Form von drei- und vierwertigen Metallkationen vor, so dass folgende allgemeine Formel für das Keramikmaterial resultiert:

$$[\{(SE_1^{III}, SE_2^{III})_{1-x}(M_1^{II},M_2^{II})_x\}(Cr^{III}_{1-x-y-z+t}Cr^{IV}_{x-t}Mn^{III}_{y-t}Mn^{IV}_t (Me_1^{III}, Me_2^{II})_z)O_3]$$

wobei $SE_1^{III}$ oder $SE_2^{III}$ Seltenerdmetallkationen sind, $M_1^{II}$ und $M_2^{II}$ ausgewählt sind aus $Ca^{II}$, $Sr^{II}$ und $Me_1^{III}$ und $Me2^{III}$ redoxstabile, dreiwertige Metallkationen sind, wobei für die Parameter gilt:

```
x+y+z < 1;  0 < x < 1;  0 < z < 1;  0 ≤ t ≤ x
```

wobei für $0 < t < x$ gilt: $t \leq y \leq 1+t-x-z$, für $t = 0$ gilt: $0 < y \leq 1-x-z$ und für $t = x$ gilt: $x < y < 1$-z.

Die Formulierung $(SE_1^{III}, SE_2^{III})$ in den obigen allgemeinen Formeln bedeutet, dass auf äquivalenten Gitterplätzen innerhalb des Kristallgitters des Keramikmaterials entweder nur das Seltenerdmetall $SE_1^{III}$ oder nur das Seltenerdmetall $SE_2^{III}$ vorhanden sein kann oder auch dass auf äquivalenten Gitterplätzen auf verschiedenen Positionen innerhalb eines Keramikmaterials sowohl $SE_1^{III}$ als auch $SE_1^{III}$ nebeneinander vorhanden sein können. Die entsprechende Bedeutung kommt auch den Formulierungen $(M_1^{II},M_2^{II})$ für die zweiwertigen Metallkationen und $(Me_1^{III},Me_2^{III})$

für die dreiwertigen, redoxstabilen Metallkationen zu.

Die Erfinder haben erkannt, dass bei den oben genannten Keramikmaterialien der allgemeinen Formeln ein Stromtransport über Platzwechselprozesse zwischen Metallkationen, vor allem Übergangsmetallkationen unterschiedlicher Oxidationsstufen zustande kommen kann. Dies kann auch als Polaronenleitung ("Hoppig-Leitung") bezeichnet werden. Dabei kann es z. B. zu einem Ladungstransport zwischen nicht-redoxstabilen Übergangsmetallkationen, z. B. von $Cr^{III}$ zu $Cr^{IV}$ oder von $Mn^{III}$ auf $Mn^{IV}$ oder zu wechselseitigen Übergängen zwischen $Cr^{III}/Mn^{III}$ bzw. $Mn^{III}/Cr^{IV}$ innerhalb des Keramikmaterials kommen. Durch einen Austausch dieser nicht-redoxstabilen Übergangsmetallkationen gegen die redoxstabilen, dreiwertigen Metalle $Me^{III}$ kann dabei der Ladungstransport aufgrund einer Erhöhung des mittleren Hopping-Abstandes und einer dadurch hervorgerufenen Abnahme der Strompfade herabgesetzt werden. Durch Einstellung des Parameters z für die dreiwertigen Metalle $Me^{III}$ können infolgedessen Keramikmaterialien mit erhöhtem Widerstand und erhöhter B-Konstante resultieren im Vergleich zu Keramikmaterialien, bei denen die nicht-redoxstabilen Übergangsmetallkationen nicht partiell gegen redoxstabile dreiwertige Metallkationen $Me^{III}$ ausgetauscht sind. Durch Variation des Parameters z und auch noch zusätzliche Variation der Parameter x und y lassen sich somit die elektrischen Eigenschaften des Keramikmaterials in weiten Grenzen auf einen jeweils gewünschten Wert einstellen. Unter Polaronen werden in dem Keramikmaterial auftretende Quasiteilchen verstanden, wobei ein beim Ladungstransport auftretender Ladungsträger in seiner Umgebung im zumindest teilweise ionisch gebundenen Festkörper des Keramikmaterials Gitterverzerrungen hervorruft. Die Gesamtheit des Ladungsträgers und der Gitterverzerrung wird dabei als Polaron bezeichnet.

Aufgrund einer Ladungsübertragung zwischen $Cr^{IV}$ und $Mn^{III}$ im oben genannten Keramikmaterial der allgemeinen Formel kann dieses Keramikmaterial auch durch zwei allgemeine Grenzformeln dargestellt werden. Für eine komplette Ladungsübertragung zwischen $Cr^{IV}$ und $Mn^{III}$, also für t = x lässt sich das Keramikmaterial durch die folgende allgemeine Formel beschreiben:

$$[\{(SE_1^{III},SE_2^{III})_{1-x}(M_1^{II},M_2^{II})_x\}\,(Cr^{III}_{1-y-z}Mn^{III}_{y-x}Mn^{IV}_x\,(Me_1^{III},Me_2^{III})_z)O_3]$$

Kommt eine Ladungsübertragung zwischen $Cr^{IV}$ und $Mn^{III}$ nicht zustande, also für t = 0 lässt sich das Keramikmaterial durch folgende allgemeine Formel beschreiben:

$$[\{(SE_1^{III},SE_2^{III})_{1-x}(M_1^{II},M_2^{II})_x\}(Cr^{III}_{1-x-y-z}Cr^{IV}_xMn^{III}_y\,(Me_1^{III},Me_2^{III})_z)O_3]$$

Die beiden Formeln stellen "Grenzformeln" dar. Im Keramikmaterial können aber auch Verteilungen von Oxidationsstufen der nicht-redoxstabilen Übergangsmetallkationen vorhanden sein, bei denen diese Ladungsübertragung nur teilweise stattgefunden hat, also der Fall 0 < t < x vorliegt.

Erfindungsgemäß ist das Keramikmaterial eine einzige homogene Phase. In der Abgrenzung zu phasenheterogenen Systemen kann dadurch eine nachteilige Drift der elektrischen Eigenschaften bedingt durch zeitabhängige stoffliche Umsetzungen an den Kontaktzonen verschiedener Phasen vermieden oder zumindest vermindert werden

Im Einzelnen kann das Keramikmaterial erfindungsgemäß als phasenhomogenes Perowskit-Mischkristallsystem eines elektrisch halbleitenden ersten Perowskitsystems und eines elektrisch nicht leitenden zweiten Perowskitsystems aufgefasst werden. Dadurch kann es möglich sein, ein auch bei hoher Temperatur thermodynamisch stabiles Keramikmaterial bereitzustellen. Dadurch lassen sich die mit nicht phasenhomogenen Keramiksystemen verbundenen Nachteile einer zeitlichen Drift der elektrischen Parameter in dem für die Temperaturmessung genutzten Temperaturbereich im Rahmen gesetzter Grenzen reduzieren beziehungsweise verhindern. Somit sind Widerstände aus dem Keramikmaterial herstellbar, die dem von einem Hochtemperaturheißleiter geforderten Widerstandswerten und deren Temperaturabhängigkeit gerecht werden.

Bei einem derartigen phasenhomogenen Perowskitmischkristallsystem kann zum Beispiel der Ladungstransport durch den oben genannten Platzwechsel von Ladungsträgern zwischen Übergangsmetallkationen unterschiedlicher Oxidationsstufen stattfinden, wobei diese Übergangsmetallkationen im Netzwerk eckenverknüpfter Sauerstoffoktaeder der Perowskitstruktur angeordnet sind.

In einer weiteren Ausführungsform der Erfindung kann das erste elektrisch halbleitende Perowskitsystem die allgemeine Strukturformel $\{(SE_1^{III},SE_2^{III})_{1-x}(M_1^{II},M_2^{II})_x\}(Cr^{III}_{1-x-y+t}Cr^{IV}_{x-t}Mn^{III}_{y-t}Mn^{IV}_t)O_3$ aufweisen, wobei entsprechend $0 \leq t \leq x$ der Anteil an $Cr^{IV}$ bzw. $Mn^{IV}$ variabel sein kann, und das zweite elektrisch nicht leitende Perowskitsystem die allgemeine Strukturformel $(SE_1^{III}, SE_2^{III})\,(Me_1^{III},Me_2^{III})O_3$ aufweist. Durch Kombination des ersten elektrisch halbleitenden Perowskitsystems mit dem zweiten elektrisch nicht leitenden Perowskitsystem lassen sich ebenfalls gut die elektrischen Eigenschaften durch unterschiedliche Mischungsverhältnisse der beiden Perowskitsysteme einstellen.

Erfindungsgemäß sind die Parameterbereich für die Parameter x, y und z, die die elektrischen Eigenschaften des Keramikmaterials einstellen, wie in Anspruch 1 definiert. Vorzugsweise ist der Parameterbereich von x zwischen 0,01 und 0,5, weiter bevorzugt 0,01 bis 0,3, wobei die genannten Werte jeweils auch mit umfasst sind.

Die Seltenerdmetalle $SE^{III}$ können dabei einzeln oder in Mischungen mit variabler Konzentration auf jeweils gleichen Positionen der Kristallstruktur des phasenhomogenen Perowskit-Mischkristallsystems vorhanden sein, wobei Y, La, Ce und Sm bevorzugt sind.

Das dreiwertige redoxstabile Metall Me$^{III}$ kann vor allem Al$^{III}$, Ga$^{III}$ oder Mischungen davon sein.

Das phasenhomogene Perowskit-Mischkristallsystem kann durch die Mischkristallbildung zwischen dem elektrisch halbleitenden Perowskitsystem und SE$^{III}$AlO$_3$ bzw. SE$^{III}$GaO$_3$ beschrieben werden. Dadurch können Fluktuationen der Kontakte zwischen verschiedenen benachbarten Körnern im Mikrometerbereich des Keramikmaterials der leitenden Komponente, wie sie normalerweise bei heterogenen, nicht einphasigen Gemischen zweier Pulverkomponenten auftreten, auf Bruchteile von Nanometern auf der atomaren Skala der Perowskitstruktur reduziert werden.

Gegenstand einer weiteren Ausführungsform der Erfindung ist auch ein elektrokeramisches Bauelement das eines der oben genannten Keramikmaterialien umfasst. Dabei ist es möglich, dass das elektrokeramische Bauelement einen keramischen Grundkörper aufweist, der das oben genannte Keramikmaterial enthält und zusätzlich elektrisch leitfähige Kontaktierungen auf der Oberfläche, beispielsweise auf der Basis von Platin enthält.

Derartige elektrokeramische Bauelemente können beispielsweise Heißleiter sein und können zur Temperaturmessung in Thermistoren bis in den Bereich höherer Temperaturen von circa 1000 Grad Celsius verwendet werden. Derartige Heißleiter können beispielsweise in technischen Vorrichtungen der Abgassensorik von Verbrennungsmotoren für Partikelfilter und Katalysatoren verwendet werden.

Mittels der verschiedenen Ausführungsformen der oben genannten Keramikmaterialien lassen sich somit NTC-Thermistoren herstellen die keine beziehungsweise nur eine verminderte zeitliche Drift der Kennlinie aufweisen und damit auch bei höheren Temperaturen hinreichend alterungsstabil sind. Mit dem Widerstand $R_T$ beziehungsweise dem spezifischen Widerstand $\rho_T$ unter Bezug auf eine durch den Index N bezeichnete Nenntemperatur, zum Beispiel 25 Grad Celsius kann die Kennlinie annähernd durch die Arrheniusbeziehung:

$$R_T \;=\; R_N \; \exp[B/T] \;\; bzw. \;\; \rho_T \;=\; \rho_N \; \exp[B/T]$$

beschrieben werden, wobei die B-Konstante in Grad Kelvin über die Bolzmannkonstante k gemäß $B = E_A/k$ mit der thermischen Aktivierungsenergie $E_A$ verknüpft ist. Die thermische Aktivierungsenergie gibt die Aktivierungsenergie für die Polaronenleitung an und wird im Allgemeinen auf ein bestimmtes Temperaturintervall zum Beispiel entsprechend $B_{25/100°C}$ auf 25 bis 100 Grad Celsius bezogen. Die B-Konstante ist außerdem ein Maß für die temperaturabhängige Empfindlichkeit $\alpha$, die die Veränderung des Widerstand in Abhängigkeit von der Temperatur angibt:

$$\alpha \;=\; 1/\rho_T\,(d\rho_T/dT) \;=\; -\;B/T^2$$

eines Thermistors.

Gegenstand einer weiteren Ausführungsform der Erfindung ist weiterhin ein Verfahren zur Herstellung eines Keramikmaterials, wobei eine Mischung der Verbindungen SE$^{III}_2$O$_3$, M$^{II}$CO$_3$, Cr$_2$O$_3$, Mn$_2$O$_3$, Mn$_3$O$_4$, MnCO$_3$ und Me$^{III}_2$O$_3$ in den gewünschten Mengen erzeugt wird und anschließend mittels Sinterns ein Keramikmaterial erzeugt wird. Mittels des Sinterns und dabei stattfindender Redoxübergänge zwischen den verschiedenen Metallkationen können dabei die oben genannten Perowskitsysteme und auch die Keramikmaterialien der oben genannten allgemeinen Formeln gebildet werden.

Dabei ist es auch möglich die oben genannten Verbindungen beispielsweise aus wässriger Phase auszufällen und dann zu trocknen und zu sintern. Weiterhin können die oben genannten Verbindungen auch gemischt werden und anschließend bei Temperaturen von etwa 1000 bis 1300 Grad Celsius, bevorzugt 1050 bis 1200 Grad Celsius kalziniert werden. Anschließend kann dann mittels einer Zwischenmahlung eine Korngröße $d_{50}$ von etwa einem Mikrometer erreicht werden (etwa 50 Prozent der Körner haben dann eine Korngröße von ungefähr einem Mikrometer). Die Dispersität des Pulvers kann nach der Zwischenmahlung und nach einer anschließenden Feinmahlung auch in einem Korngrößenbereich $d_{50}$ von etwa 0,3 bis 1 Mikrometer liegen.

Gemäß einer weiteren Ausführungsform eines erfindungsgemäßen Verfahrens kann dann mittels Sinterns ein phasenhomogenes Perowskitmischkristallsystem gebildet werden, das eine einheitliche Phase bildet.

Der Sinterungsprozess kann beispielsweise bei Temperaturen zwischen 1400 und 1600 Grad Celsius, bevorzugt zwischen 1400 und 1500 Grad Celsius durchgeführt werden. Dabei ist es möglich auch Sinterhilfsmittel, beispielsweise Li$_2$CO$_3$, Li$_2$SO$_4$, oder Bi$_2$O$_3$ zuzusetzen um eine hinreichende Sinterverdichtung zu erreichen.

Im Folgenden sollen verschiedene Ausführungsformen der Erfindung anhand von Ausführungsbeispielen und einer Zeichnung erläutert werden.

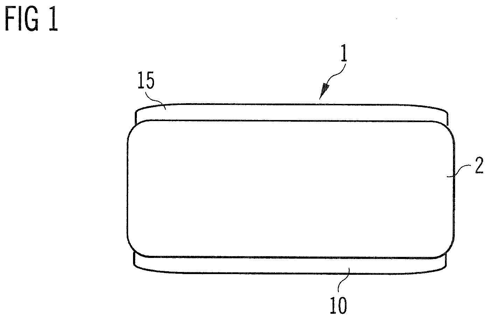

Figur 1 zeigt dabei ein elektrokeramisches Bauelement 1 im Querschnitt. Der keramische Grundkörper 2 enthält dabei zumindest eine Ausführungsform der oben genannten keramischen Materialien und stellt somit einen Heißleiter dar. Auf den beiden gegenüberliegenden Hauptoberflächen sind die elektrisch leitfähigen Kontaktflächen 10 und 15 angeordnet.

Ausführungsbeispiel:

Herstellung des Keramikmaterials $Y_{0,84}Ca_{0,6}Cr_{0,6}Mn_{0,2}Al_{0,2}O_3$ (x = 0,16; y = 0,2; z = 0,2)

Zur Herstellung von 250 g Pulver werden 51,99 Gew% $Y_2O_3$, 8,04 Gew% $CaCO_3$, 22, 95 Gew% $Cr_2O_3$, 7, 73 Gew% $Mn_2O_3$, und 5,60 Gew% $Al_2O_3$ zusammen mit 200 bis 300 g deionisiertem Wasser eingewogen und vorgemahlen. Nach dem Trocknen erfolgt die erste Kalzinierung des Pulvers für 4 Std. bei 1050-1150°C. Die darauf folgende Hauptmahlung der wässrigen Suspension erfolgt mit Yttrium-stabilisierten Zirkonoxidkugeln, wobei eine Zielkorngröße $d_{50}$ kleiner 1,5 $\mu$m angestrebt wird. Nach erneutem Trocknen und einer zweiten Kalzinierung des Pulvermaterials bei 1100-1200°C für 4 h erfolgt eine Feinmahlung auf eine Korngröße $d_{50}$ kleiner 0,8 $\mu$m. Zur Erhöhung der Sinteraktivität werden diesem Pulver beispielsweise 1-2 mol% $Bi_2O_3$ beigemengt und in einer Exzentermühle homogenisiert.

Zur Herstellung von Probenkörpern wird das Keramikpulver zu Pressgranulat verarbeitet, um daraus scheibenförmige Presslinge zu fertigen. Die elektrische Anbindung an die NTC-Keramik wird durch das Aufbringen einer Pt-Paste als elektrische Kontaktflächen im Siebdruck auf die beiden Hauptoberflächen der Scheibenproben durchgeführt. Danach werden mittels Ko-Sinterung sowohl die elektrischen Kontaktflächen in den keramischen Grundkörper eingebrannt als auch das Keramikmaterial gesintert. Die Sinterung erfolgt nach üblicher Entbinderung bei 1400-1500°C bei einer Haltezeit von 1-3 Std.

Die Beständigkeit der derart hergestellten NTC-Bauelemente wird danach durch Widerstandsmessungen in stabilen Temperaturbädern bewertet und die elektrischen Alterungsdriften während entsprechender Hochtemperaturlagerungen charakterisiert (siehe Tabellen 1 und 2 unten).

Zur Bestimmung der elektrischen Parameter von bestimmten Ausführungsformen von Keramikmaterialien wurden zylindrische Keramikproben mit einem Durchmesser von drei Millimeter und einer Höhe von jeweils 1,5 Millimeter mit elektrisch leitfähigen Platin-Kontaktflächen gemäß dem oben beschriebenen Verfahren hergestellt, wobei je nach gewünschter Zusammensetzung des Keramikmaterials unterschiedliche Einwaagen der Ausgangsstoffe eingesetzt werden. Die allgemeinen Formel der dabei verwendeten Keramikmaterialien ist:

$$Y^{III}_{1-x}Ca^{II}_x(Cr_{1-y-z}Mn_yAl_z)O_3.$$

Es können sowohl Cr als auch Mn als drei- und vierwertige Metallkationen vorliegen, so dass folgende allgemeine Grenzformeln resultieren:

$$Y^{III}_{1-x}Ca^{II}_x(Cr^{III}_{1-x-y-z}Cr^{IV}{}_xMn^{III}{}_yAl_z)O_3 \text{ bzw. } Y^{II}_{1-x}Ca^{II}_x(Cr^{III}_{1-y-z}Mn^{IV}{}_xMn^{III}{}_{y-x}Al_z)O_3$$

Anschließend wurden die elektrischen Eigenschaften und das Alterungsverhalten der zylindrischen Keramikproben bestimmt, wobei das Alterungsverhalten im Zeitbereich einer Voralterung aus den Änderungen $\Delta\rho_{25}$ des spezifischen Widerstandes oder der Änderung des B-Werts $\Delta B$ in Prozent nach 72 Stunden und weiteren 72 Stunden also 144 Stunden Lagerungen bei den angegebenen Temperaturen bis zu 500 Grad Celsius bestimmt wurde. Die Angaben geben dabei die Änderung gegenüber der Lagerungsstufe davor an. Die bei 800 und bei 1000 Grad Celsius gemessenen Werte resultieren aus einer Fortsetzung nach der Alterung bei 500 Grad Celsius.

Tabelle 1: Alterungsverhalten der Proben

| Zusammensetzung | | | $\rho_{25°C}$/k$\Omega$cm 20 Teile | B / K 20 Teile | $\Delta\rho_{25°C}$/% (72 h, T in °C) | | | | | | $\Delta\rho_{25°C}$/% (144 h, T in °C) | | | | | |
| x | y | z | | | 80 | 150 | 300 | 500 | 800 | 1000 | 80 | 150 | 300 | 500 | 800 | 1000 |
|---|---|---|---|---|---|---|---|---|---|---|---|---|---|---|---|---|
| 0,20 | 0,20 | 0,2 | 3,83 ± 4% | 3270 ± 0,10% | +0,9 | +5,6 | +5,3 | -0,1 | +1,3 | - | +0,4 | +2,0 | -0,5 | -0,1 | +0,1 | - |
| 0,16 | 0,264 | 0,2 | 18,3 ± 4% | 3533 ± 0,10% | +0,7 | +1,0 | +0,4 | +0,1 | -6,9 | - | +0,2 | +0,3 | +0,1 | +0,2 | -0,9 | - |
| 0,18 | 0,225 | 0,1 | 28,1 ± 4% | 3680 ± 0,05% | +0,3 | +0,8 | ±0 | -0,2 | -1,9 | -0,6 | +0,2 | +0,4 | +0,1 | ±0 | ±0 | +0,4 |
| 0,16 | 0,20 | 0,2 | 114 ± 3% | 3927 ± 0,05% | +0,3 | +0,6 | ±0 | ±0 | -2,1 | -1,2 | +0,1 | +0,2 | ±0 | ±0 | ±0 | +0,1 |
| 0,12 | 0,24 | 0,2 | 124 ± 5% | 3755 ± 0,07% | +2,0 | +2,4 | +0,8 | +0,4 | -3,9 | - | +1,1 | +0,9 | +0,1 | -0,1 | -0,9 | - |
| 0,12 | 0,20 | 0,2 | 342 ± 5% | 3925 ± 0,05% | +1,5 | +1,9 | +0,8 | +0,3 | -2,5 | -1,5 | +1,1 | +1,0 | +0,2 | ±0 | -0,5 | -0,4 |
| 0,14 | 0,175 | 0,3 | 565 ± 5% | 4177 ± 0,06% | +0,2 | +0,3 | -0,1 | -0,5 | -3,2 | - | +0,4 | +0,3 | +0,2 | +0,2 | -0,9 | - |
| 0,12 | 0,16 | 0,2 | 657 ± 5% | 4216 ± 0,04% | +0,5 | +2,7 | +1,3 | +0,6 | -2,7 | - | +1,1 | +1,2 | +0,2 | +0,2 | -0,4 | - |

Tabelle 2: Veränderungen der B-Werte der Proben

| Zusammensetzung | | | $\rho_{25°C}$/k$\Omega$cm 20 Teile | B / K 20 Teile | $\Delta$B/% (72 h, T in °C) | | | | | | $\Delta$B/% (144 h, T in °C) | | | | | |
|---|---|---|---|---|---|---|---|---|---|---|---|---|---|---|---|---|
| x | y | z | | | 80 | 150 | 300 | 500 | 800 | 1000 | 80 | 100 | 300 | 500 | 800 | 1000 |
| 0,20 | 0,20 | 0,2 | 3,83 $\pm$ 4% | 3270 $\pm$ 0,10% | +0,05 | +0,46 | +0,68 | -0,07 | +0,48 | - | -0,02 | +0,15 | -0,15 | -0,10 | +0,08 | - |
| 0,16 | 0,264 | 0,2 | 18,25 $\pm$ 4% | 3533 $\pm$ 0,10% | +0,12 | +0,20 | +0,14 | +0,10 | -0,01 | - | -0,04 | -0,01 | -0,02 | -0,04 | -0,01 | - |
| 0,18 | 0,225 | 0,1 | 28,1 $\pm$ 4% | 3680 $\pm$ 0,05% | $\pm$0 | +0,06 | -0,02 | -0,01 | +0,05 | -0,12 | -0,05 | $\pm$0 | +0,01 | +0,01 | +0,08 | +0,06 |
| 0,16 | 0,20 | 0,2 | 114 $\pm$ 3% | 3927 $\pm$ 0,05% | +0,01 | +0,03 | $\pm$0 | -0,01 | +0,01 | -0,15 | $\pm$0 | $\pm$0 | $\pm$0 | $\pm$0 | +0,07 | +0,02 |
| 0,12 | 0,24 | 0,2 | 124 $\pm$ 5% | 3755 $\pm$ 0,07% | -0,05 | +0,03 | +0,07 | +0,08 | 0,05 | - | +0,11 | +0,23 | -0,02 | -0,06 | -0,02 | - |
| 0,12 | 0,20 | 0,2 | 342 $\pm$ 5% | 3925 $\pm$ 0,05% | -0,07 | -0,03 | $\pm$0 | +0,03 | +0,02 | -0,07 | +0,06 | +0,05 | -0,02 | $\pm$0 | +0,01 | -0,06 |
| 0,14 | 0,175 | 0,3 | 565 $\pm$ 5% | 4177 $\pm$ 0,06% | -0,01 | -0,02 | -0,02 | -0,03 | +0,06 | - | -0,02 | $\pm$0 | $\pm$0 | -0,05 | -0,04 | - |
| 0,12 | 0,16 | 0,2 | 657 $\pm$ 5% | 4216 $\pm$ 0,04% | -0,06 | $\pm$0 | +0,05 | +0,01 | -0,01 | - | +0,07 | +0,05 | -0,08 | -0,02 | $\pm$0 | - |

# EP 2 118 037 B1

Die Temperaturänderung des Widerstands beträgt bei den in den Tabellen 1 und 2 aufgeführten Beispielen nach dem Hochtemperatur-Härtetest bei 1000 Grad Celsius für 1000 Stunden weniger als drei Prozent woraus sich bei einer B-Konstanten von 3600 K und einem Nennwiderstand $\rho_{25°C}$ = 200 kΩcm eine Standardabweichung der Temperaturmessung $\Delta T = \pm 3$ bis 5 K ergibt. Die oben genannten Messwerte der Tabellen 1 und 2 zeigen damit besonders deutlich dass für verschiedene Zusammensetzungen x, y und z für die verschiedenen Ausführungsformen der erfindungsgemäßen Keramikmaterialien hochtemperaturstabile bis 1000 Grad Celsius zuverlässig einsetzbare Thermistoren hergestellt werden können.

Die Erfindung ist nicht durch die Beschreibung anhand der Ausführungsbeispiele beschränkt.

## Patentansprüche

1. Keramikmaterial mit negativem Temperaturkoeffizienten des Widerstands mit der allgemeinen Formel:

$$[\{(SE_1^{III},SE_2^{III})_{1-x}(M_1^{II},M_2^{II})_x\}(Cr_{1-y-z}Mn_y(Me_1^{III},Me_2^{III})_z)O_3]$$

wobei $(SE_1^{III},SE_2^{III})$ Seltenerdmetallkationen sind und $SE_1^{III}$ gleich $SE_2^{III}$ sein kann oder für verschiedene Seltenerdmetallkationen für Mischungen von $SE_1^{III}$ und $SE_2^{III}$ steht, $M_1^{II}$ gleich $M_2^{II}$ sein kann oder deren Mischungen mit variablen Anteilen und für $Ca^{II}$ oder $Sr^{II}$ steht und $Me_1^{III}$ und $Me_2^{III}$ redoxstabile, dreiwertige Metallkationen sind, die gleich oder verschieden sein können und gilt: $0 < x < 1$; $0,1 \le z \le 0,5$; $0,1 \le y \le 0,3$ und
und wobei das Keramikmaterial als phasenhomogenes Perowskit-Mischkristallsystem eines ersten elektrisch halbeitenden Perowskitsystems und eines zweiten elektrisch nicht leitenden Perowskitsystems ausgebildet ist.

2. Keramikmaterial nach dem vorhergehenden Anspruch, mit der allgemeinen Formel:

$$[\{(SE_1^{III},SE_2^{III})_{1-x}(M_1^{II},M_2^{II})_x\}(Cr^{III}_{1-x-y-z+t}Cr^{IV}_{x-t}Mn^{III}_{y-t}Mn^{IV}_t (Me_1^{III},Me_2^{III})_z)O_3]$$

wobei für die Parameter gilt:

$$x+y+z < 1;\ 0 < x < 1;\ 0 < z < 1;\ 0 \le t \le x$$

wobei für $0 < t < x$ gilt: $t \le y < 1+t-x-z$, für $t = 0$ gilt: $0 < y \le 1-x-z$ und für $t = x$ gilt: $x < y \le 1-z$.

3. Keramikmaterial nach einem der vorhergehenden Ansprüche, wobei $SE_1^{III}$ und $SE_2^{III}$ ausgewählt sind aus einer Gruppe, die aus $Y^{III}$, $Ce^{III}$, $Sm^{III}$ und $La^{III}$ besteht.

4. Keramikmaterial nach einem der vorhergehenden Ansprüche, wobei $Me_1^{III}$ und $Me_2^{III}$ ausgewählt sind aus einer Gruppe, die aus $Al^{III}$ und. $Ga^{III}$ besteht.

5. Keramikmaterial nach einem der vorhergehenden Ansprüche, mit den allgemeinen Formeln für $t = 0$ oder $t = x$:

$$Y^{III}_{1-x}Ca^{II}_x(Cr^{III}_{1-x-y-z}Cr^{IV}_xMn^{III}_yAl^{III}_z)O_3 \text{ oder } Y^{III}_{1-x}Ca^{II}_x(Cr^{III}_{1-y-z}Mn^{IV}_xMn^{III}_{y-x}Al^{III}_z)O_3.$$

6. Keramikmaterial nach einem der vorhergehenden Ansprüche, wobei für den Parameter x gilt: $0,01 \le x \le 0,5$, bevorzugt $0,01 \le x \le 0,3$.

7. Keramikmaterial nach dem vorhergehenden Anspruch,
bei dem das erste elektrisch halbleitende Perowskitsystem $SE^{III}_{1-x}M^{II}_x (Cr_{1-y}Mn_y) O_3$ und das zweite elektrisch nicht leitende Perowskitsystem $SE^{III}Me^{III}O_3$ umfasst, worin $M^{II}$ aus der aus $M_1^{II}$, $M_2^{II}$ und deren Mischung bestehender Gruppe ausgewählt ist.

8. Verfahren zur Herstellung eines Keramikmaterials nach einem der vorhergehenden Ansprüche,
wobei eine Mischung der Verbindungen $SE^{III}_2O_3$, $M^{II}CO_3$, $Cr_2O_3$, $Mn_2O_3$, $Mn_3O_4$, $MnCO_3$ und $Me^{III}_2O_3$ in den gewünschten Mengen erzeugt und anschließend gesintert wird, worin $M^{II}$ aus der aus $M_1^{II}$, $M_2^{II}$ und deren Mischung bestehender Gruppe ausgewählt ist.

9. Verfahren nach Anspruch 8, wobei mittels des Sinterns ein phasenhomogenes Perowskit-Mischkristallsystem gebildet wird.

10. Elektrokeramisches Bauelement,
umfassend ein Keramikmaterial nach einem der Ansprüche 1 bis 7.

11. Elektrokeramisches Bauelement nach dem vorhergehenden Anspruch,
umfassend einen keramischen Grundkörper der das Keramikmaterial enthält und elektrisch leitfähige Elektrodenflächen.

**Claims**

1. Ceramic material having a negative temperature coefficient of the resistance and having the general formula:

$$[\{(SE_1^{III}, SE_2^{III})_{1-x}(M_1^{II}, M_2^{II})_x\}(Cr_{1-y-z}Mn_y(Me_1^{III}, Me_2^{III})_z)O_3]$$

wherein $(SE_1^{III}, SE_2^{III})$ are rare earth metal cations and $SE_1^{III}$ can be identical to $SE_2^{III}$ or represents various rare earth metal cations for mixtures of $SE_1^{III}$ and $SE_2^{III}$, $M_1^{II}$ can be identical to $M_2^{II}$ or mixtures thereof with variable proportions and is $Ca^{II}$ or $Sr^{II}$ and $Me_1^{III}$ and $Me_2^{III}$ are redox-stable, trivalent metal cations which can be identical or different and $0 < x < 1$; $0.1 \leq z \leq 0.5$; $0.1 \leq y \leq 0.3$ and
the ceramic material is a phase-homogeneous perovskite mixed crystal system of a first electrically semiconductive perovskite system and a second electrically nonconductive perovskite system.

2. Ceramic material according to the preceding claim having the general formula:

$$[\{(SE_1^{III}, SE_2^{III})_{1-x}(M_1^{II}, M_2^{II})_x\}(Cr^{III}_{1-x-y-z+t}Cr^{IV}_{x-t}Mn^{III}_{y-t}Mn^{IV}_t(Me_1^{III}, Me_2^{III})_z)O_3]$$

where the parameters are such that:

$$x+y+z \; < \; 1; \; 0 \; < \; x \; < \; 1; \; 0 \; < \; z \; < \; 1; \; 0 \; \leq \; t \; \leq \; x$$

wherein in the case of $0 < t < x$: $t \leq y < 1+t-x-z$, in the case of $t = 0$: $0 < y \leq 1-x-z$ and in the case of $t = x$: $x < y \leq 1-z$.

3. Ceramic material according to either of the preceding claims, wherein $SE_1^{III}$ and $SE_2^{III}$ are selected from the group consisting of $Y^{III}$, $Ce^{III}$, $Sm^{III}$ and $La^{III}$.

4. Ceramic material according to any of the preceding claims, wherein $Me_1^{III}$ and $Me_2^{III}$ are selected from the group consisting of $A1^{III}$ and $Ga^{III}$.

5. Ceramic material according to any of the preceding claims having the general formula for $t = 0$ or $t = x$:

$$Y^{III}_{1-x}Ca^{II}_x(Cr^{III}_{1-x-y-z}Cr^{IV}_xMn^{III}_yAl^{III}_z)O_3$$

or

$$Y^{III}_{1-x}Ca^{II}_x(Cr^{III}_{1-y-z}Mn^{IV}_xMn^{III}_{y-x}Al^{III}_z)O_3 \; .$$

6. Ceramic material according to any of the preceding claims, wherein the parameter x is such that: $0.01 \leq x \leq 0.5$, preferably $0.01 \leq x \leq 0.3$.

7. Ceramic material according to the preceding claim, wherein the first electrically semiconductive perovskite system comprises $SE^{III}_{1-x}M^{II}_x(Cr_{1-y}Mn_y)O_3$ and the second electrically nonconductive perovskite system comprises $SE^{III}Me^{III}O_3$, where $M^{II}$ is selected from the group consisting of $M_1^{II}$, $M_2^{II}$ and mixtures thereof.

8. Process for producing a ceramic material according to any of the preceding claims, wherein a mixture of the com-

pounds $SE^{III}_2O_3$, $M^{II}CO_3$, $Cr_2O_3$, $Mn_2O_3$, $Mn_3O_4$, $MnCO_3$ and $Me^{III}_2O_3$ in the desired amounts is produced and subsequently sintered, where $M^{II}$ is selected from the group consisting of $M_1^{II}$, $M_2^{II}$ and mixtures thereof.

9. Process according to Claim 8, wherein a phase-homogenous perovskite mixed crystal system is formed by means of the sintering.

10. Electroceramic component comprising a ceramic material according to any of Claims 1 to 7.

11. Electroceramic component according to the preceding claim comprising a ceramic main element containing the ceramic material and electrically conductive electrode faces.


**Revendications**

1. Matériau céramique présentant des coefficients de température négatifs de la résistance, ayant la formule générale suivante :

$$[\{(SE_1^{III},SE_2^{III})_{1-x}(M_1^{II},M_2^{II})_x\}(Cr_{1-y-z}Mn_y(Me_1^{III},Me_2^{III})_z)O_3],$$

dans laquelle $(SE_1^{III}, SE_2^{III})$ sont des cations de métaux de terres rares, et $SE_1^{III}$ peut être identique à $SE_2^{III}$, ou représente des cations de métaux de terres rares différents pour des mélanges de $SE_1^{III}$ et $SE_2^{III}$, $M_1^{II}$ peut être identique à $M_2^{II}$, ou représente leurs mélanges avec des proportions variables et représente $Ca^{II}$ ou $Sr^{II}$, et $Me_1^{III}$ et $Me_2^{III}$ sont des cations de métaux trivalents stables à l'oxydoréduction, qui peuvent être identiques ou différents, et avec : $0 < x < 1$ ; $0,1 \leq z \leq 0,5$ ; $0,1 \leq y \leq 0,3$, et dans lequel le matériau céramique est configuré sous la forme d'un système cristallin mixte pérovskite à phases homogènes d'un premier système pérovskite électriquement semi-conducteur et d'un deuxième système pérovskite électriquement non conducteur.

2. Matériau céramique selon la revendication précédente, ayant la formule générale suivante :

$$[\{(SE_1^{III},SE_2^{III})_{1-x}(M_1^{II},M_2^{II})_x\}(Cr^{III}_{1-x-y-z+t}Cr^{IV}_{x-t}Mn^{III}_{y-t}Mn^{IV}_t(Me_1^{III},Me_2^{III})_z)O_3],$$

dans laquelle, pour les paramètres :

x+y+z < 1 ; 0 < x < 1 ; 0 < z < 1 ; $0 \leq t \leq x$, avec pour 0 < t < x : $t \leq y < 1+t-x-z$, pour t = 0 : $0 < y \leq 1-x-z$ et pour t = x : $x < y \leq 1-z$.

3. Matériau céramique selon l'une quelconque des revendications précédentes, dans lequel $SE_1^{III}$ et $SE_2^{III}$ sont choisis dans un groupe constitué par $Y^{III}$, $Ce^{III}$, $Sm^{III}$ et $La^{III}$.

4. Matériau céramique selon l'une quelconque des revendications précédentes, dans lequel $Me_1^{III}$ et $Me_2^{III}$ sont choisis dans un groupe constitué par $Al^{III}$ et $Ga^{III}$.

5. Matériau céramique selon l'une quelconque des revendications précédentes, ayant les formules générales suivantes pour t = 0 ou t = x :

$$Y^{III}_{1-x}Ca^{II}_x(Cr^{III}_{1-x-y-z}Cr^{IV}_xMn^{III}_yAl^{III}_z)O_3$$

ou

$$Y^{III}_{1-x}Ca^{II}_x(Cr^{III}_{1-y-z}Mn^{IV}_xMn^{III}_{y-x}Al^{III}_z)O_3.$$

6. Matériau céramique selon l'une quelconque des revendications précédentes, dans lequel, pour le paramètre x : $0,01 \leq x \leq 0,5$, de préférence $0,01 \leq x \leq 0,3$.

7. Matériau céramique selon la revendication précédente, dans lequel le premier système pérovskite électriquement semi-conducteur comprend $SE^{III}_{1-x}M^{II}_x(Cr_{1-y}Mn_y)O_3$ et le deuxième système pérovskite électriquement non conducteur comprend $SE^{III}Me^{III}O_3$, $M^{II}$ étant choisi dans le groupe constitué par $M_1^{II}$, $M_2^{II}$ et leur mélange.

8.  Procédé de fabrication d'un matériau céramique selon l'une quelconque des revendications précédentes, dans lequel un mélange des composés $SE^{III}_2O_3$, $M^{II}CO_3$, $Cr_2O_3$, $Mn_2O_3$, $Mn_3O_4$, $MnCO_3$ et $Me^{III}_2O_3$ en les quantités souhaitées est formé, puis fritté, $M^{II}$ étant choisi dans le groupe constitué par $M_1^{II}$, $M_2^{II}$ et leur mélange.

9.  Procédé selon la revendication 8, dans lequel un système cristallin mixte pérovskite à phases homogènes est formé par le frittage.

10. Composant électrocéramique, comprenant un matériau céramique selon l'une quelconque des revendications 1 à 7.

11. Composant électrocéramique selon la revendication précédente, comprenant un corps de base céramique qui contient le matériau céramique et des surfaces d'électrode électriquement conductrices.

FIG 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006054258 A
- JP 2003183075 A
- WO 2006109792 A